(19) Europäisches Patentamt

European Patent Office

Office européen des brevets

(11) Veröffentlichungsnummer: **0 184 255**
**B1**

(12) **EUROPÄISCHE PATENTSCHRIFT**

(45) Veröffentlichungstag der Patentschrift:
**26.10.88**

(21) Anmeldenummer: **85201913.2**

(22) Anmeldetag: **20.11.85**

(51) Int. Cl.⁴: **C 03 C 1/00,** C 03 C 3/00,
C 01 B 33/158, C 03 B 37/025,
C 03 B 8/02

(54) **Verfahren zum Herstellen monolithischer Glaskörper.**

(30) Priorität: **03.12.84 NL 8403667**

(43) Veröffentlichungstag der Anmeldung:
**11.06.86 Patentblatt 86/24**

(45) Bekanntmachung des Hinweises auf die Patenterteilung:
**26.10.88 Patentblatt 88/43**

(84) Benannte Vertragsstaaten:
**AT BE CH DE FR GB IT LI NL SE**

(56) Entgegenhaltungen:
EP - A - 0 067 741
FR - A - 844 113
FR - A - 1 575 283
GB - A - 2 140 408

(73) Patentinhaber: **N.V. Philips' Gloeilampenfabrieken,
Groenewoudseweg 1, NL-5621 BA Eindhoven (NL)**

(72) Erfinder: **van Lierop, Joseph Gijsbertus, p/a INT.
OCTROOIBUREAU B.V. Prof. Holstlaan 6, NL-5656 AA
Eindhoven (NL)**
Erfinder: **Bögemann, Arnoldus Bernardus Maria, p/a INT.
OCTROOIBUREAU B.V. Prof. Holstlaan 6, NL-5656 AA
Eindhoven (NL)**
Erfinder: **Felder, Willy Johannes Bertha, p/a INT.
OCTROOIBUREAU B.V. Prof. Holstlaan 6, NL-5656 AA
Eindhoven (NL)**
Erfinder: **Huizing, Albert, p/a INT. OCTROOIBUREAU
B.V. Prof. Holstlaan 6, NL-5656 AA Eindhoven (NL)**

(74) Vertreter: **Auwerda, Cornelis Petrus et al,
INTERNATIONAAL OCTROOIBUREAU B.V. Prof.
Holstlaan 6, NL-5656 AA Eindhoven (NL)**

## Beschreibung

Die Erfindung bezieht sich auf ein Verfahren zum Herstellen monolithischer Glaskörper, wobei ein monolithisches Gel aus einer alkoholischen Lösung zubereitet wird, die Tetraethoxysilan ( $(C_2H_5O)_4Si$, auch als Äthylorthosilikat bezeichnet) aufweist, das Gel getrocknet und anschliessend durch Erhitzung verdichtet wird, wobei wenigstens die Trocknung dadurch erfolgt, dass das Gel in einem hermetisch abgeschlossenen Raum auf eine Temperatur oberhalb der kritischen Temperatur des alkoholischen Lösungsmittels erhitzt und anschliessend der Druck abgelassen wird.

Ein derartiges Verfahren ist dem US Patent Nr. 4 432 956 bekannt. In dieser Veröffentlichung wird ein Verfahren beschrieben, nach dem ein Gel aus einer Lösung seines Alkoxysilans, insbesondere Tetramethoxysilan ( $(CH_3O)_4Si$ )in dem entsprechenden Alkohol, dem eine zum Hydrolysieren des Silans ausreichende Menge Wasser hinzugefügt wird, zubereitet wird. Nachdem sich das Gel wenigstens teilweise gebildet hat, wird das Gefäss in einen Autoklaven gestellt. In den Autoklaven wird eine zusätzliche Menge Alkohol gegeben, so dass beim Erreichen der kritischen Temperatur auch der kritische Druck des Alkohols erreicht wird. Nachdem die Temperatur bis über die kritische Temperatur des Lösungsmittels gestiegen ist, wird der Druck in dem Autoklaven langsam verringert. Auf diese Weise könnte ein trocknes monolithisches Gel erhalten werden, ohne dass beim Trocknen Risse entstehen. Nach der Veröffentlichung erfolgt das Ablasssen des Druckes meistens in 2 bis 5 Stunden. Diese Trocknungszeit zeichnet sich gegen Trocknungszeiten bei atmosphärischem Druck, die eine Woche oder länger betragen können und wobei eine Schrumpfung des Gels offenbar nicht vermieden werden kann, besonders günstig ab (siehe beispielsweise Electronics Letters 19 (1982) Seite 499: «New Optical Fibre Fabrication Method»).

Das Trocknen eines Gels oberhalb der kritischen Temperatur in einem Autoklaven bietet den Vorteil, dass beim Ablassen des Druckes keine Kappilarkräfte in den Poren des Gels auftreten können, weil in den Poren eine Flüssigkeit-Dampf-Trennfläche nicht mehr vorhanden ist. Die Trocknungszeit ist ausserdem viel weniger abhängig von den Abmessungen oder der Raumform des Gels.

Bei dem bekannten Verfahren ist das innere Volumen des verwendeten hermetisch abgeschlossenen Raumes kleiner als das kritische Volumen der vorhandenen Alkoholmenge. Unter idealen Verhältnissen dürften in dem Alkohol beim Erhitzen bis an die überkritische Temperatur keine Siedeerscheinungen auftreten. Unter «idealen Verhältnissen» wird in diesem Zusammenhang verstanden, dass die Temperatur in dem hermetisch abgeschlossenen Raum gleichmässig erhöht werden kann, ohne dass Temperaturgradienten auftreten. In der Praxis lässt sich dies besonders schwer verwirklichen, insbesondere bei Autoklaven grossen Inhalts, auf die man jedoch bei der industriellen Durchführung dieser Verfahren angewiesen ist. In der Praxis hat sich gezeigt, dass Siedeerscheinungen durch örtliche Überhitzung in der gelierenden Lösung und nach der Bildung des Gels kaum vermeidbar sind. Dies führt zu einer Beschädigung der Gele.

Ein weiterer Nachteil ist, dass beim Anwärmen bis an die kritische Temperatur in der Praxis oft Flüssigkeit-Gas-Trennflächen in den Poren des Gels gebildet werden. Unter dem Einfluss der dadurch in den Poren des Gels auftretenden Kapillarkräfte kann Schrumpfung oder sogar Desintegration des Gels auftreten.

Es hat sich herausgestellt, dass bei einem Verfahren, bei dem das Gelieren in einem hermetisch abgeschlossenen Raum erfolgt und in dem hermetisch abgeschlossenen Raum ein Gasdruck vorgegeben wird, der derart hoch ist, dass beim Erhitzen auf eine Temperatur oberhalb der kritischen Temperatur keine Siedeerscheinungen auftreten können (siehe die am 10.07.1985 veröffentlichte europäische Patentanmeldung entsprechend EP-A-0 147 887), das Gelieren bei Verwendung von Tetraethoxysilan vorzugsweise unter Anwesenheit einer flüchtigen Base durchgeführt werden muss. Es zeigte sich, dass die Gelierzeit und die Struktur und damit die Schrumpfung des Gels beim Gelieren und dem darauffolgenden Trocknen vom pH-Wert der Lösung abhängig waren. Bei Verwendung einer flüchtigen Base sind nur dann reproduzierbare Ergebnisse möglich, wenn die Verfahrensschritte sorgfältig beherrscht werden. Wegen der Aufnahme von $CO_2$ aus der Atmosphäre und Verdampfung der flüchtigen Base ist es notwendig, die Temperatur der basischen Lösung und die Dauer, während diese der Atmosphäre ausgesetzt ist, genauestens zu beherrschen. Die Verwendung einer flüchtigen Base lässt sich kaum vermeiden, wenn man das Gelieren einerseits in dem hermetisch abgeschlossenen Raum mit einer angemessenen Geschwindigkeit erfolgen lassen will und andererseits die Einführung von beispielsweise Alkalioxiden in das Quarzglas zu vermeiden wünscht.

Die Erfindung hat nun zur Aufgabe, die beschriebenen Probleme möglichst zu vermeiden und noch andere, untenstehend näher zu beschreibende Vorteile zu bewirken.

Nach der Erfindung wird dies erzielt mit einem Verfahren, das das Kennzeichen aufweist, dass in einem ersten Schritt in einem Alkohol gelöstes Tetraethoxysilan durch Hinzufügen von Wasser und einer Säure hydrolysiert und in einem zweiten Schritt der hydrolysierten Lösung Wasser und eine Menge einer Base hinzugefügt wird, die durchaus ausreicht, um die vorhandene Menge Säure zu neutralisieren, wobei die Säure und die Base derart gewählt werden, dass bei der Neutralisierung eine Verbindung gebildet wird, die flüchtig genug ist, um bei den nachfolgenden Verfahrensschritten entweichen zu können, wonach gewünschtenfalls nach Gelieren der basisch reagierenden hydrolysierten Tetraethoxysilanlösung das Reaktionsgemisch in einen hermetisch abgeschlossenen Raum gegeben wird unter einem Gasdruck der so hoch ist, dass beim Erhitzen auf eine Temperatur oberhalb der kritischen Temperatur in dem Lösungsmittel keine Siedeerscheinungen auftreten können.

Das Gelieren kann völlig oder teilweise in dem hermetisch abgeschlossenen Raum erfolgen.

Bei der Hydrolyse von Tetraethoxysilan in saurer Umgebung kann beispielsweise Salzsäure (HCl) oder Salpetersäure ($HNO_3$) verwendet werden. Beim Gelieren in basischer Umgebung und zum Neutralisieren der Säure kann beispielsweise eine Ammoniaklösung ($NH_4OH$) oder eine organische Stickstoffbase verwendet werden, die mit der vorhandenen Säure eine Verbindung bildet, die beim Ablassen des Druckes zusammen mit dem Lösungsmittel verdampft.

Es hat sich herausgestellt, dass bei Anwendung des erfindungsgemässen Verfahrens homogene Lösungen mit hohen Siliziumgehalten erhalten werden können.

Bei Proben hat sich gezeigt, dass mit der Höhe des vorgegebenen Gasdrucks im System auch die endgültige Dichte (Gew./Vol.) des monolithischen Gels bestimmt werden kann. Dabei wurde ermittelt, dass, je höher der Gasdruck gewählt wird, desto kleiner die Dichte der monolithischen Gele ist, die mit dem erfindungsgemässen Verfahren hergestellt werden können. Durch die Wahl eines geeigneten Gasdrucks wird erreicht, dass das monolithische Gel beim Erhitzen auf eine Temperatur oberhalb der kritischen Temperatur und beim Ablassen des Druckes nahezu keine Schrumpfungserscheinungen zeigt und folglich nach Trocknung solche Form und Abmessungen aufweist, wie sie bei der Bildung des Gels vorlagen. Offenbar wird durch Vorgeben eines ausreichend hohen Gasdrucks die Bildung von Flüssigkeit-Gas-Trennflächen in den Poren des Gels auf wirksame Weise unterdrückt oder wenigstens der nachteilige Einfluss derselben neutralisiert.

Es hat sich dabei als nicht notwendig erwiesen, dass das Volumen des hermetisch abgeschlossenen Raumes kleiner ist als das kritische Volumen der in dem Raum vorhandenen Menge alkoholischen Lösungsmittels. Beim Erhitzen bis an die kritische Temperatur ist bei einer richtigen Wahl des vorgegebenen Gasdrucks bei jeder Temperatur der Gesamtdruck in dem hermetisch abgeschlossenen Raum immer höher als der Sättigungsdampfdruck des Lösungsmittels, das bei der Herstellung des Gels verwendet wird. Bei einem Gemisch von Lösungsmitteln, die untereinander unterschiedliche kritische Temperaturen aufweisen, wird, wenn die Konzentrationsverhältnisse derart sind, dass bei der niedrigsten kritischen Temperatur eines vorhandenen Lösungsmittels das andere bzw. die anderen Lösungsmittel noch als Flüssigkeit vorhanden ist bzw. sind, auf eine Temperatur erhitzt, bei der auch das letzte Lösungsmittel völlig in die Gasphase übergegangen ist.

Geeignete Gase oder niedrig siedende Stoffe, die zum Erzeugen eines Gasdrucks verwendbar sind, sind beispielsweise Wasserstoff, Helium, Stickstoff, Sauerstoff, Chlor, Thionylchlorid und Argon.

Die Temperatur, auf die erhitzt werden kann, wird im Grunde, soweit sie über der kritischen Temperatur der (des) Lösungsmittel(s) liegen, nur durch den Druck und die Temperatur, gegen die die Wände des hermetisch abschliessbaren Raumes beständig sind und die Temperatur, bei der organische Stoffe, die in diesem Raum vorhanden sind, zu verkohlen anfangen, begrenzt. Bei Verwendung eines Lösungsmittels, das völlig oder zu einem grossen Teil aus Äthanol besteht, wird vorzugsweise ein Gasdruck von mindestens 50 bar vorgegeben, wenn man beim Erhitzen bis an die kritische Temperatur und bei dem darauffolgenden Ablassen des Druckes Schrumpfungserscheinungen des monolithischen Gels vermeiden will. Die kritische Temperatur von Äthanol beträgt 243 °C. Geeignete Temperaturen liegen zwischen 275 und 325 °C, wenn das Lösungsmittel im wesentlichen aus Äthanol besteht. Der Druck in dem hermetisch abgeschlossenen Raum kann dabei bis zu Drucken über 300 bar ansteigen.

Es hat sich herausgestellt, dass das Ablassen des Druckes besonders schnell erfolgen kann. Ein Gelkörper mit einer Länge von 400 mm und mit einem Durchmesser von etwa 30 mm kann beispielsweise in einer Stunde getrocknet werden.

Das Unterdrücken der Schrumpfung beim Trocknen ist insbesondere von Bedeutung, wenn beabsichtigt wird, mit dem erfindungsgemässen Verfahren monolithische Gele in Form von Rohren herzustellen, beispielsweise in einem zylinderförmigen Gefäss, in dem zentral ein Zylinder angeordnet ist, dessen Achse mit der des zylinderförmigen Gefässes übereinstimmt. Wenn das Gel sich beim Trocknen festschrumpfen würde, liesse sich das monolithische Gel einer derartigen Form nur schwierig unbeschädigt entnehmen.

Der Lösung von Tetraethoxysilan ($Si(OC_2H_5)_4$) können noch eine oder mehrere Verbindungen anderer Elementen, deren Oxide mit $SiO_2$ ein Glas bilden können, hinzugefügt werden und zwar beispielsweise, um den Brechungsindex des Glaskörpers, der nach dem Verdichten des Gels erhalten wird, auf einen bestimmten Wert einzustellen und/oder um andere physikalische Eigenschaften zu regeln. Derartige Verbindungen sind beispielsweise Alkoxyverbindungen von Aluminium, Titan, Bor, Germanium, Seltenerdmetallen und dergleichen, deren Alkoxygruppen jeweils im allgemeinen nicht mehr als 4 Kohlenstoffatome aufweisen. Auch Nitrate, Karbonate, Acetate und andere Verbindungen, die sich leicht zerlegen lassen unter Bildung von Oxiden, können gegebenenfalls verwendet werden. Fluor kann dadurch eingebaut werden, dass der Lösung Fluorverbindungen, beispielsweise $NH_4F$, HF oder $NH_4F.HF$ hinzugefügt werden. Die $SiO_2$-Konzentration kann noch dadurch erhöht werden, dass $SiO_2$ als solches der Tetraethoxysilanlösung hinzugefügt wird. Das $SiO_2$ muss in fein dispergierter Teilchenform (Aerogel) vorliegen. Andere Glasbildner könnte ebenfalls in dieser Weise hinzugefügt werden, um deren Konzentration in der Lösung zu erhöhen.

Es wurde gefunden, dass es bei dem erfindungsgemässen Verfahren Vorteile bietet, die genannten Verbindungen der Tetraethoxysilanlösung erst hinzuzufügen, nachdem diese in dem ersten Schritt des Verfahrens durch Hinzufügen von Wasser und einer Säure hydrolysiert ist. Dadurch wird eine gute Verteilung des betreffenden Elementes im $SiO_2$-Gerüst bewirkt, auch in denjenigen Fällen, wo die etwaige Hydrolyse der Verbindung des betreffenden Elementes schneller vor sich geht als die von Tetraethoxysilan.

Um die gewünschten Voraussetzungen für die Hydrolyse des Tetraethoxysilans zu schaffen, zählt bei Verwendung wässeriger Lösungen einer Säure die hinzugefügte Menge Wassers bei der Wassermenge, die für die Hydrolyse des Tetraethoxysilans notwendig ist und bei den gegebenenfalls noch hinzuzufügende Alkoxy- oder anderen Verbindungen von Elementen mit, die in Form ihrer Oxide mit $SiO_2$ ein Glas bilden können. Die Lösungen werden in Gefässen geeigneter Form und Abmessung in den Autoklaven gestellt. Das Gefäss entspricht, was Form und Abmessungen anbelangt, der Form und der Abmessung der Körper aus dem monolithischen Gel, das man herzustellen wünscht. Wenn ein rohrförmiger Gelkörper hergestellt wird, kann das Gefäss und ein gegebenenfalls darin angeordneter Zylinder aus einem beliebigen Werkstoff bestehen, der gegenüber den verwendeten Flüssigkeiten gewünschtenfalls nahezu inert ist. Das Gefäss kann beispielsweise aus Quarzglas bestehen. Um Haftung zu vermeiden, kann die Gefässoberfläche, die Kontakt mit der Flüssigkeit hat, mit einem Werkstoff wie Silikonkautschuk oder dergleichen überzogen sein.

Nach der Bildung des Gels kann eine Verdichtung erfolgen durch Erhitzung während einer gewissen Dauer bei einer hohen Temperatur, beispielsweise bei 1300 °C, beispielsweise in einer oxidierenden Atmosphäre. Abhängig von der Erhitzungsdauer und der Temperatur wird ein mehr oder weniger poröser Körper erhalten. Es ist möglich, einen völlig massiven Körper herzustellen, beispielsweise dadurch, dass die Temperatur mit einer Geschwindigkeit von 300 °C je Stunde auf 1300 °C gebracht und diese Temperatur etwa eine Stunde lang beibehalten wird. Die Erhitzung kann völlig oder teilweise in einer chlorhaltigen Atmosphäre durchgeführt werden, um die letzten Hydroxylgruppen aus dem Gel zu entfernen.

Mit dem erfindungsgemässen Verfahren lassen sich Glaskörper einer beliebigen Form und gegebenenfalls mit einem bestimmten Ausmass an Porosität herstellen.

Die mit dem erfindungsgemässen Verfahren erhaltenen Glaskörper können bei der Herstellung optischer Wellenleiter, als Trägerkörper für Katalysatoren (die Körper können selbst als Katalysatoroberfläche verwendet werden), zur selektiven Trennung von Bestandteilen und als Molekularsiebe verwendet werden.

An Hand der untenstehenden Ausführungsbeispiele wird die Erfindung nun näher erläutert.

Ausführungsbeispiel 1

Ausgegangen wird von einer Mischung mit einem molaren Verhältnis $Si(OC_2H_5)_4$: $C_2H_5OH:H_2O$ = 1:2:2. Zunächst wird das Tetraethoxysilan in (absolutem) Äthanol gelöst, anschliessend wird das Wasser in zwei Portionen hinzugefügt. Zunächst werden der Lösung von Tetraethoxysilan in Äthanol 3 Volumenteile $10^{-2}$ M HCl zugefügt, wonach eine halbe Stunde lang bei 40 °C gerührt wird. Daraufhin werden nach Abkühlung auf Raumtemperatur unter Rühren 13 Volumenteile $6.10^{-2}$ M $NH_4OH$ hinzugefügt. Danach wird die Lösung in mit Silikonkautschuk ausgekleidete Formen gebracht. Die Formen werden in einen Autoklaven gestellt. Ein Gasdruck von 80 bar $N_2$ wird vorgegeben. Die Temperatur wird auf etwa 300 °C erhöht bei einer Aufheizgeschwindigkeit von 50 °C/Stunde. Nach etwa 1 Stunde bei 300 °C wird der Druck allmählich abgelassen und danach wird der Ofen ausgeschaltet. Bei Raumtemperatur wird der Autoklav geöffnet und es können die gebildeten getrockneten Gele in Form von Rohren oder Stäben den Formen entnommen werden.

Ausführungsbeispiel 2

In einem Becherglas werden einer Menge von 708 g Tetraethoxysilan 313 g (absolutes) Äthanol hinzugefügt. Der Lösung werden unter Rühren 23 g einer wässrigen Lösung von $10^{-2}$ M HCl hinzugefügt. Die Lösung wird während etwa 10 Minuten auf 40 °C erhitzt. Nach Abkühlung auf Raumtemperatur werden unter Rühren 99,5 g wässrige Lösung von $6.10^{-2}$ M $NH_4OH$ hinzugefügt. Danach werden 58 mit Silikonkautschuk ausgekleidete Pyrex-Formen mit der Lösung gefüllt und in einen Autoklaven mit einem Inhalt von 5000 cm$^3$ gestellt. Nach dem Verschliessen des Autoklaven wird ein Gasdruck von 80 bar $N_2$ erzeugt. Mit 50 °C/Stunde wird die endgültige Temperatur von 300 °C erreicht. Nach etwa 1 Stunde bei dieser Temperatur wird der Druck unter Beibehalten dieser Temperatur allmählich abgebaut (etwa 1 Stunde). Danach wird die Heizung ausgeschaltet. Bei Raumtemperatur wird der Autoklav geöffnet; es wurden 58 Stäbe mit einem Durchmesser von 15 mm und einer Länge von 150 mm erhalten. Die Stäbe zeigten keine Rissbildung und sassen mit Gleitsitz in den Formen. Die Dichte beträgt 0,17 g/cm$^3$.

Ausführungsbeispiel 3

Wie im Ausführungsbeispiel 1 wird eine hydrolysierte Lösung von Tetraethoxysilan zubereitet. Nach Abkühlung auf Raumtemperatur wird eine Menge Bormethanolat hinzugefügt, die einer Menge von 10 Mol% $B_2O_3$ bezogen auf die Menge $SiO_2$, entspricht. Dadurch wird vermieden, dass Bormethanolat unmittelbar mit Wasser reagiert und ein Niederschlag gebildet wird, es wird aber erreicht, dass das Bor auf einfache Weise durch eine Reaktion von Bormethanolat mit hydrolysiertem Silicium gebunden werden kann. Die Reaktionszeit beträgt etwa 10 Minuten. Danach wird, wie in dem Beispiel 1 beschrieben, eine Lösung von $NH_4OH$ hinzugefügt. Das Verfahren entspricht dann weiter dem des Ausführungsbeispiels 1.

Ausführungsbeispiel 4

Ausgegangen wird von einer Mischung mit einem molaren Verhältnis $Si(OC_2H_5)_4:H_2O:C_2H_5OH = 1:4:4$. Zunächst wird das Tetraethoxysilan in Äthanol gelöst; anschliessend werden als saurer Anteil 7 Volumenteile $10^{-2}$ M HCl hinzugefügt. Nach Abkühlung auf Raumtemperatur wird Germaniumäthanolat (5 Mol% $GeO_2$, bezogen auf $SiO_2$) hinzugefügt. Dann werden als basischer Anteil 25 Volumenteile $6.10^{-2}$ M $NH_4OH$ hinzugefügt. Das Verfahren entspricht dann weiter dem des Ausführungsbeispiels 1. Nach Trocknung werden monolithische Gele mit einer Dichte von 0,16 g/cm$^3$ erhalten.

Ausführungsbeispiel 5

Ausgegangen wird von einer Mischung mit einem molaren Verhältnis $Si(OC_2H_5)_4:H_2O:C_2H_5OH = 1:2:2$. Zunächst wird das Tetraethoxysilan in Äthanol gelöst, anschliessend werden als saurer Anteil 3 Volumenteile $10^{-2}$ M HCl hinzugefügt. Nach Abkühlung auf Raumtemperatur wird Aluminiumisopropionat (15 Mol% $Al_2O_3$, bezogen auf $SiO_2$) hinzugefügt. Dann werden als basischer Anteil 17 Volumenteile $6.10^{-2}$ M $NH_4OH$ hinzugefügt. Das Verfahren entspricht dann weiter dem aus dem Ausführungsbeispiel 1. Nach Trocknung werden Gele mit einer Dichte von 0,223 g /cm$^3$ erhalten.

Ausführungsbeispiel 6

Ausgegangen wird von einer Mischung mit einem molaren Verhältnis $Si(OC_2H_5)_4:H_2O:C_2H_5OH = 1:2:2$. Der alkoholischen Siliziumäthanolatlösung wird 1 Volumenteil $10^{-2}$ M HCl hinzugefügt. Bei 50 °C wird über die Dauer einer halben Stunde gerührt. Nach Abkühlung auf Raumtemperatur wird dieser Lösung Terbiumnitrat, Tb $(NO_3)_3.6$ $H_2O$ hinzugefügt und gelöst. Nach 15 Minuten Rühren werden 7 Volumenteile 2 M $NH_4OH$ hinzugefügt. Die Lösung wird in mit Silikonkautschuk ausgekleidete Formen gegeben. Daraufhin werden die Formen in den Autoklaven gestellt, ein Stickstoff-Gasdruck erzeugt und die Temperatur bis über die kritische Temperatur von Äthanol ($T_{kr} = 243$ °C) erhöht. Langsam wird der Druck abgelassen und der Autoklav wird danach auf Raumtemperatur abgekühlt. Das trockene Gel wird der Lehre entnommen. Das erhaltene Gel ist lumineszierend.

Mit dem erfindungsgemässen Verfahren werden Stäbe mit einem Durchmesser von 75 mm und mit einer Länge von 350 mm und mehr erhalten. Ebenfalls wurden Rohre hergestellt mit einem Aussendurchmesser von 28 mm und einem Innendurchmesser von 4 bis 10 mm. Die Länge betrug 400 mm. Die Abmessungen des Autoklaven wirkten dabei nicht wesentlich einschränkend. Es wurden ebenfalls Körper mit einem rechteckigen Querschnitt hergestellt (10 × 10 × 150 mm). Die Dichten der monolithischen Gele vor dem Verdichten liegt in der Grössenordnung zwischen 0,15 und 0,25 g/cm$^3$.

**Patentansprüche**

1. Verfahren zum Herstellen monolithischer Glaskörper, wobei ein monolithisches Gel aus einer alkoholischen Lösung zubereitet wird, die Tetraethoxysilan ( $(C_2H_5O)_4Si$) aufweist, das Gel getrocknet und anschliessend durch Erhitzung verdichtet wird, wobei wenigstens die Trocknung dadurch erfolgt, dass das Gel in einem hermetisch abgeschlossenen Raum auf eine Temperatur oberhalb der kritischen Temperatur des alkoholischen Lösungsmittels erhitzt und anschliessend der Druck abgelassen wird, dadurch gekennzeichnet, dass in einem ersten Schritt in einem Alkohol gelöstes Tetraethoxysilan durch Hinzufügen von Wasser und einer Säure hydrolysiert und in einem zweiten Schritt der hydrolysierten Lösung Wasser und eine Menge einer Base hinzugefügt wird, die durchaus ausreicht, um die vorhandene Menge Säure zu neutralisieren, wobei die Säure und die Base derart gewählt werden, dass bei der Neutralisierung eine Verbindung gebildet wird, die flüchtig genug ist, um bei den nachfolgenden Verfahrensschritten entweichen zu können, wonach gewünschtenfalls nach Gelieren der basisch reagierenden hydrolysierten Tetraethoxysilanlösung das Reaktionsgemisch in einen hermetisch abgeschlossenen Raum gegeben wird unter einem vorgegebenen Gasdruck, der so hoch ist, dass bei der Erhitzung auf eine Temperatur oberhalb der kritischen Temperatur in dem Lösungsmittel keine Siedeerscheinungen auftreten können.

2. Verfahren nach Anspruch 1, dadurch gekennzeichnet, dass bei Verwendung von Äthanol als Lösungsmittel ein Gasdruck von mindestens 50 bar vorgegeben wird.

3. Verfahren nach den Ansprüchen 1 und 2, dadurch gekennzeichnet, dass ein Gasdruck mit einem Gas, gewählt aus der Gruppe die durch Wasserstoff, Helium, Stickstoff, Sauerstoff, Chlor und Argon gebildet wird, vorgegeben wird.

4. Verfahren nach den Ansprüchen 1 und 2, dadurch gekennzeichnet, dass ein Gasdruck mit Thionylchlorid vorgegeben wird.

5. Verfahren nach Anspruch 1, dadurch gekennzeichnet, dass das Gel in dem hermetisch abgeschlossenen Raum auf eine Temperatur zwischen 275 und 325 °C erhitzt wird, wenn das Lösungsmittel im wesentlichen aus Äthanol besteht.

6. Verfahren nach Anspruch 1, dadurch gekennzeichnet, dass der hydrolysierten Tetraethoxysilanlösung vor dem Gelieren eine oder mehrere Verbindungen anderer Elemente deren Oxide mit $SiO_2$ ein Glas bilden können, hinzugefügt werden.

7. Verfahren nach Anspruch 1, dadurch gekennzeichnet, dass der hydrolysierten Tetraethoxysilanlösung vor dem Gelieren eine Fluorverbindung aus der Gruppe HF, $NH_4F$ und $NH_4F.HF$ hinzugefügt wird.

8. Verfahren nach Anspruch 1, dadurch gekennzeichnet, dass der hydrolysierten Tetraethoxysilanlösung vor dem Gelieren eine Alkoxyverbindung von Aluminium, Titan, Bor, Germanium oder einem Seltenerdmetall hinzugefügt wird.

9. Verfahren nach Anspruch 1, dadurch gekennzeichnet, dass der hydrolysierten Tetraethoxysilanlösung Verbindungen von Aluminium, Titan, Bor, Germanium oder einem Seltenerdmetall hinzugefügt werden, die sich bei den angewandten Termperaturen unter Bildung von Oxiden leicht zerlegen.

**Revendications**

1. Procédé pour la fabrication de corps en verre monolithiques, selon lequel un gel monolithique est préparé à partir d'une solution alcoolique contenant du tétraéthoxysilane ( $(C_2H_5O)_4Si$) le gel est séché et ensuite densifié par chauffage, opération lors de laquelle s'effectue au moins le séchage du fait que le gel est chauffé dans un espace fermé hermétiquement à une température située au-dessus de la température critique du solvant alcoolique, après quoi la pression est éliminée, caractérisé en ce que dans une première phase du tétraéthoxysilane dissous dans un alcool est hydrolisé par addition d'eau et d'un acide et dans une deuxième phase la solution hydrolisée est additionnée d'eau et d'une quantité d'une base qui suffit amplement pour neutraliser la quantité d'acide présente, l'acide et la base étant choisis de façon que lors de la neutralisation, il se forme un composé qui est suffisamment volatil pour s'échapper au cours des phases suivantes du processus, après quoi, au besoin après gélification de la solution de tétraéthoxysilane hydrolisée réagissant de façon basique, le mélange réactionnel est introduit dans une enceinte fermée hermétiquement sous une pression gazeuse tellement élevée que lors du chauffage à une température supérieure à la température critique dans le solvant, il ne peut se produire de phénomènes d'ébullition.

2. Procédé selon la revendication 1, caractérisé en ce que dans le cas d'utilisation d'éthanol comme solvant, on utilise une pression gazeuse d'au moins 50 bars.

3. Procédé selon la revendication 1 ou 2, caractérisé par l'utilisation d'une pression gazeuse avec un gaz choisi dans le groupe constitué par l'hydrogène, l'hélium, l'azote, l'oxygène, le chlore et l'argon.

4.Procédé selon la revendication 1 ou 2, caractérisé par l'utilisation d'une pression gazeuse avec du thionyle.

5. Procédé selon la revendication 1, caractérisé en ce que le gel est chauffé dans une enceinte fermée hermétiquement à une température comprise entre 175 et 325 °C, lorsque le solvant est essentiellement constitué par de l'éthanol.

6. Procédé selon la revendication 1, caractérisé en ce qu'avant la gélification, la solution de tétraéthoxysilane hydrolysée est additionnée d'un ou de plusieurs composés d'autres éléments dont les oxydes sont susceptibles de former un verre avec $SiO_2$.

7. Procédé selon la revendication 1, caractérisé en ce qu'avant la gélification, la solution de tétraéthoxysilane hydrolysée est additionnée d'un composé de fluor dans le groupe HF, $NH_4F$ et $NH_4F.HF$.

8. Procédé selon la revendication 1, caractérisé en ce qu'avant la gélification, la solution de tétraéthoxysilane hydrolysée est additionnée d'un composé alkoxy d'aluminium, titane, bore, germanium ou un métal des terres rares.

9. Procédé selon la revendication 1, caractérisé en ce que la solution de tétraéthoxysilane hydrolysée est additionnée de composés d'aluminium, titane, bore, germanium ou d'un métal des terres rares qui se décomposent facilement aux températures utilisées avec formation d'oxyde.

**Claims**

1. A method of manufacturing monolithic glass members by preparing a monolithic gel from an alcoholic solution which comprises tetraethoxysilane ( $(C_2H_5O)_4Si$), drying the gel and then densifying it by heating, in which at least drying takes place by heating the gel in a hermetically sealed container to a temperature above the critical temperature of the alcoholic solvent and then removing the pressure, characterized in that, in a first step, tetraethoxysilane dissolved in an alcohol is hydrolyzed by the addition of water and an acid and, in a second step, water and a quantity of basic material are added to the hydrolyzed solution which quantity of basic material is more than sufficient to neutralize the quantity of acid present, the acid and the basic material being chosen to be so that in the neutralization a compound which is sufficiently volatile to escape in the subsequent process steps is formed, after which, if desired after gelation of the basically reacting hydrolyzed tetraethoxysilane solution, the reaction mixture is introduced into a hermetically sealed container under a given gas pressure which is so high that during the heating to a temperature above the critical temperature no boiling phenomena can occur in the solvent.

2. A method as claimed in Claim 1, characterized in that when ethanol is used as a solvent a gas pressure of at least 50 bar is applied.

3. A method as claimed in Claims 1 and 2, characterized in that a gas pressure is applied with a gas selected from the group formed by hydrogen, helium, nitrogen, oxygen, chlorine and argon.

4. A method as claimed in Claims 1 and 2, characterized in that a gas pressure is applied using thionyl chloride.

5. A method as claimed in Claim 1,characterized in that if tht solvent consists substantially of ethanol, the gel is heates in the hermerically sealed container to a temperature between 275 and 325 °C.

6. A method as claimed in Claim 1, characterized in that one or more compounds of other elements the oxides of which with $SiO_2$ can form a

glass, are added to the hydrolyzed tetraethoxysilane solution prior to gelation.

7. A method as claimed in Claim 1, characterized in that a fluorine compound from the group formed by HF, $NH_4F$ and $NH_4F.HF$ is added to the hydrolyzed tetraethoxysilane solution prior to gelation.

8. A method as claimed in Claim 1, characterized in that an alkoxy compound of aluminium, titanium, boron, germanium or of a rare-earth metal is added to the hydrolyzed tetraethoxysilane solution prior to gelation.

9. A method as claimed in Claim 1, characterized in that compounds of aluminium, titanium, boron, termanium or of a rare-earth metal which readily decompose at the temperatures used while forming oxides, are added to the hydrolyzed tetraethoxysilane solution.